# EUROPÄISCHE PATENTSCHRIFT

(11) **EP 3 424 851 B1**
(45) Veröffentlichungstag und Bekanntmachung des Hinweises auf die Patenterteilung: **21.12.2022**
(21) Anmeldenummer: 18176000.0
(22) Anmeldetag: 05.06.2018
(51) Int. Cl.: B65G 57/24, B65G 47/08, B65G 47/88

(54) **ANORDNUNG ZUR VERSCHWENKUNG EINER ANSCHLAGLEISTE**
ARRANGEMENT FOR PIVOTING A STOP BAR
DISPOSITION POUR PIVOTER UNE BARRE D'ARRÊT

(30) Priorität: 06.07.2017 DE 102017115176
(43) Veröffentlichungstag der Anmeldung: 09.01.2019
(73) Patentinhaber: Krones Aktiengesellschaft, 93073 Neutraubling (DE)
(72) Erfinder: SCHWALB, Felix, 93073 Neutraubling (DE); ASTNER, Michael, 93073 Neutraubling (DE); BEER, Erhard, 93073 Neutraubling (DE); EHBERGER, Marco, 93073 Neutraubling (DE); KOLLMUSS, Manuel, 93073 Neutraubling (DE); MEHDI, Arsalan, 93073 Neutraubling (DE); GRIMM, Sebastian, 93073 Neutraubling (DE)
(74) Vertreter: Benninger, Johannes

(56) Entgegenhaltungen:
- EP-A1- 2 000 425
- DE-U1-202009 000 109
- GB-A- 2 200 613
- NL-A- 9 100 910

## Beschreibung

Die vorliegende Erfindung betrifft eine Anordnung zur Verschwenkung einer zwischen zwei Endlagen verschwenbaren Begrenzungs- und/oder Anschlagleiste für auf einer an zwei oder drei Längsseiten durch feststehende oder bewegliche Anlageleisten oder Schieber begrenzten Auflagefläche gruppierte Artikel, Stückgüter und/oder Gebinde mit den Merkmalen des Oberbegriffs des Anspruchs 1.

Bekannte Verpackungs- oder Palettieranlagen zum Stapeln und Palettieren von Objekten, Artikel oder Stückgütern wie etwa Paketen oder Gebinden mit mehreren Artikeln wie bspw. Getränkebehältern weisen üblicherweise Horizontalfördereinrichtungen mit Förderbändern auf, auf denen die Artikel, Stückgüter oder Gebinde in ununterbrochener oder unregelmäßiger Folge zu einer Handhabungseinrichtung befördert werden. Dort erfolgt normalerweise eine Verschiebung, Ausrichtung und/oder das Drehen einzelner Stückgüter oder Gebinde, um diese in eine geeignete räumliche Anordnung zu bringen, die eine Basis oder ein sog. Lagenbild bildet, um die Stückgüter oder Gebinde in nachgeordneten Handhabungsstationen zu stapelfähigen Stückgut- oder Gebindelagen zusammenzuschieben. Die DE 10 2011 080 812 A1 oder die DE 10 2015 104 324 A1 beschreiben derartige Handhabungsverfahren und die entsprechenden Anlagen, die der Durchführung solcher Handhabungsverfahren dienen.

Eine häufige Konfiguration sieht eine Handhabungsstation vor, die einer sog. Gruppierstation in Transportrichtung der Artikel, Stückgüter oder Gebinde nachgeordnet ist. Eine solche Handhabungseinrichtung kann insbesondere durch einen höhenverstellbaren und an einem Auslegerarm seitlich verschwenkbaren Greiferkopf oder sog. Jalousiegreiferkopf gebildet sein, mit dem eine solche Artikellage übernommen und auf einem mehrlagigen Palettenstapel abgelegt werden kann. Die Übernahme einer gruppierten Artikel- oder Gebindelage erfolgt durch seitliches Überschieben der Lage zum Jalousiegreiferkopf, der für diesen Zweck exakt auf dem Niveau der Auflagefläche der Gruppierstation und mit möglichst geringem Abstand zu dieser positioniert werden muss.

Da die bekannten Gruppierstationen seitliche Schieber und Anlageleisten benötigen, um die zuvor gruppierten einzelnen Artikel oder Stückgüter in eine lückenlose Lagenanordnung zu bringen, wird auch zwischen einer Überschubstelle und der Anlageposition des Jalousiegreiferkopfes ein Anlageblech oder eine Anlageleiste benötigt, gegen die die Artikel in Förderrichtung geschoben werden können, wenn die weitgehend lückenlose Lagenanordnung erzeugt wird. Sobald der Überschub der Artikel- oder Stückgutlage erfolgen soll, muss diese Leiste entfernt, angehoben, unter das Niveau der Auflagefläche abgesenkt oder in eine horizontale Lage geschwenkt werden. Eine solche Schwenkbewegung kann bspw. mit hydraulischen, pneumatischen oder elektromotorisch betriebenen Aktoren ausgelöst werden.

Die DE 20 2009 000 109 U1 offenbart eine gattungsgemäße Anordnung mit einer Begrenzungsleiste, die sich zwischen der Auflagefläche einer Gruppierstation bzw. an deren Rand und einer in die unmittelbare Nähe der Auflagefläche bringbaren Handhabungseinrichtung befindet. Die Begrenzungsleiste kann wahlweise als Anschlagleiste oder als Übergangsblech für die gruppierten Artikel fungieren, weshalb sie um eine parallel zur Auflagefläche und unterhalb der Auflagefläche angeordnete Achse zwischen zwei Endlagen verschwenkbar ist. In einer ersten Endlage bildet die Begrenzungsleiste eine Anschlagleiste für die gruppierten Artikel und hindert diese daran, beim Zusammenschieben der zuvor gebildeten Lage von der Auflagefläche geschoben zu werden. In einer zweiten Endlage bildet die Begrenzungsleiste eine mit der Auflagefläche annähernd parallele oder in Überschubrichtung leicht nach unten geneigte Auflageleiste, die das Überschieben der gruppierten in die bspw. durch einen Jalousiegreiferkopf gebildete Handhabungseinrichtung ermöglicht. Das Verschwenken der Leiste erfolgt mittels einer steuerbaren Stelleinrichtung, die bspw. durch einen Elektromotor oder einen fluidisch betätigbaren Linearmotor gebildet sein kann.

Da die Schwenkbewegungen der Begrenzungsleiste einen gewissen Steuerungsaufwand benötigen, um die Leiste stets zum richtigen Zeitpunkt verschwenken zu können, und da außerdem der notwendige Stellantrieb zum Verschwenken der Leiste einen gewissen Bauaufwand erfordert, hat sich die vorliegende Erfindung das Ziel gesetzt, eine hinsichtlich der Ansteuerung wie auch der Betätigung vereinfachte, aber dennoch stets zuverlässig funktionierende Variante zum Verschwenken einer solchen Anschlag- und/oder Begrenzungsleiste zu schaffen.

Das obige Ziel wird mit dem Gegenstand des unabhängigen Anspruchs erreicht. Weitere vorteilhafte Ausgestaltungen werden durch die abhängigen Ansprüche beschrieben.

Zur Erreichung des genannten Ziels schlägt die Erfindung eine Begrenzungs-und/oder Anschlagleiste für auf einer an zwei oder drei Längsseiten durch feststehende oder bewegliche Anlageleisten oder Schieber begrenzte Auflagefläche gruppierte Artikel, Stückgüter und/oder Gebinde vor. Diese Auflagefläche weist an einer vierten Seite eine Überschubstelle zu einer höhen- und/oder lageveränderlichen Handhabungseinrichtung mit einer Auflageoberfläche zur Übernahme einer gruppierten Artikel-, Stückgut- und/oder Gebindelage auf. Die Begrenzungs- und/oder Anschlagleiste ist um eine in etwa parallel zur Auflagefläche und unterhalb dieser befindlichen Schwenkachse zwischen zwei Endlagen verschwenkbar. Außerdem bildet die Begrenzungs- und/oder Anschlagleiste in einer ersten Endlage eine Anlageleiste für die dagegen schiebbaren gruppierten Artikel, Stückgüter und/oder Gebinde; in einer zweiten Endlage bildet sie dagegen eine mit der Auflagefläche annähernd parallele oder in Überschubrichtung leicht nach oben oder nach unten geneigte Auflageleiste, welche die Auflagefläche verlängert und eine Verbindungs-und/oder Überschubfläche für die zu überschiebende Artikel-, Stückgut- und/oder Gebindelage zur Auflageoberfläche der Handhabungseinrichtung liefert oder bildet. Gemäß der vorliegenden Erfindung ist die Begrenzungs- und/oder Anschlagleiste mit einer steuerbaren Fördereinrichtung ausgestattet, die zumindest in der zweiten Endlage einen Horizontalförderabschnitt für die zur Handhabungseinrichtung beförderte und/oder geschobene Artikel-, Stückgut- und/oder Gebindelage ausbildet. Diese der Begrenzungs-und/oder Anschlagleiste zugeordnete Fördereinrichtung ist durch ein antreibbares Förderband gebildet.

Da die Handhabungseinrichtung nicht zwingend exakt in derselben Höhe zur Übernahme der zu überschiebenden Artikel-, Stückgut- und/oder Gebindelage bereitsteht, wie es die Auflagefläche vor oder im Bereich der Überschubstelle vorgibt, kann es sinnvoll sein, die Auflageleiste in entsprechende Neigung nach schräg oben oder schräg unten (in Überschubrichtung) zu bringen. Bei exakt fluchtenden und in derselben Höhe befindlichen Auflageoberflächen der Handhabungseinrichtung und der Auflagefläche mit der darauf stehenden Artikel-, Stückgut- und/oder Gebindelage kann die Auflageleiste dagegen horizontal angeordnet sein, wenn die Artikel-, Stückgut- und/oder Gebindelage überschoben wird.

Erfindungsgemäß ist die Fördereinrichtung bildende Förderband zumindest bei in die zweite Endlage gebrachter Begrenzungs- und/oder Anschlagleiste antreibbar und bildet dadurch den Horizontalförderabschnitt zwischen der Auflagefläche und der an die Überschubstelle positionierten Handhabungseinrichtung aus. Zudem ist hierbei sinnvollerweise vorgesehen, dass das die Fördereinrichtung bildende Förderband zumindest bei in die zweite Endlage gebrachter Begrenzungs- und/oder Anschlagleiste in Überschubrichtung der Artikel-, Stückgut- und/oder Gebindelage antreibbar ist.

Erfindungsgemäß wirkt der Antrieb des die Fördereinrichtung bildenden Förderbandes mit dem Schwenkmechanismus der Begrenzungs- und/oder Anschlagleiste in einer Weise zusammen, dass eine Antriebsrichtung des Förderbandes in Überschubrichtung die Begrenzungs- und/oder Anschlagleiste gegen die Wirkung einer Rückstellkraft in Richtung zur zweiten Endlage verschwenkt, und dass ein Stillstand des Förderbandes oder eine gegensinnige Antriebsrichtung des Förderbandes die Begrenzungs- und/oder Anschlagleiste unter Wirkung der Rückstellkraft in Richtung zur ersten Endlage zurückschwenken lässt.

Ein Antrieb des Förderbandes in Transportrichtung kann die Leiste nach unten klappen lassen, während ein Stillstand des Bandes für ein Beharren der Leiste in der jeweils eingenommenen Position sorgen kann. Zudem kann ein rückwärtiger Antrieb des Förderbandes entgegen der Transportrichtung für eine Rückschwenkbewegung der Leiste in die erste Endlage sorgen.

Die beiden erwähnten Mechanismen können auch miteinander kombiniert werden, so dass einerseits eine rückstellende Kraft wirksam ist, welche auf die Begrenzungs-und/oder Anschlagleiste wirkt und diese in Richtung ihrer Ruhelage bzw. ersten Endlage zurückzieht, dass aber auch eine die Rückschwenkbewegung unterstützende Rückwärtsbewegung des Förderbandes vorgesehen sein kann.

Das die Fördereinrichtung bildende Förderband kann bspw. einen elektromotorischen oder einen fluidischen Antrieb aufweisen. So kann das Förderband bspw. einen pneumatischen Antrieb aufweisen oder pneumatisch angetrieben werden.

Der besondere Vorteil der erfindungsgemäßen Ausführungsvariante der mit einem Förderband ausgestatteten Begrenzungs- und/oder Anschlagleiste liegt darin, dass auf einen Schieber zum Überführung einer Artikel-, Stückgut- und/oder Gebindelage von der Auflagefläche der Gruppierstation zur bspw. als Jalousiegreiferkopf ausgebildeten Handhabungseinrichtung verzichtet werden kann. Dadurch kann sich bei vielen Handhabungsschritten eine Zeitersparnis ergeben, da derartige Schieber vor einem Ablösen eines Jalousiegreiferkopfes von einer Übergabestelle zunächst aus dessen Kollisionsbereich herausbewegt werden müssen. Da bei der vorliegenden Erfindung entweder auf einen Schieber völlig verzichtet werden kann, oder dieser zumindest einen geringeren Weg zurücklegen und nicht in den Kollisionsbereich der Handhabungseinrichtung bzw. des Jalousiegreiferkopfes hineinbewegt werden muss, kann die Handhabungseinrichtung bzw. der Jalousiegreiferkopf zu einem früheren Zeitpunkt von der Gruppierstation wegbewegt werden.

In diesem Zusammenhang kann es zudem sinnvoll sein, wenn die Auflagefläche der Gruppierstation durch eine steuerbare Horizontalfördereinrichtung gebildet ist oder eine solche Horizontalfördereinrichtung aufweist, die für einen Überschub der Artikel, Stückgüter und/oder Gebinde in Transportrichtung sorgen kann, so dass auf den oben erwähnten Schieber ggf. verzichtet werden kann.

Wahlweise kann bei einer weiteren sinnvollen Konfiguration der erfindungsgemäßen Begrenzungs- und/oder Anschlagleiste vorgesehen sein, dass eine Bewegungssteuerung der Begrenzungs- und/oder Anschlagleiste zwischen ihren beiden Endlagen mit einer Position der Handhabungseinrichtung in Bezug auf die Auflagefläche gekoppelt ist, wobei Schwenkbewegungen der Begrenzungs- und/oder Anschlagleiste zwischen ihren beiden Endlagen durch die sich an die Auflagefläche annähernde oder von dieser entfernenden Handhabungseinrichtung auslösbar und/oder bewirkbar sind. Zudem kann vorgesehen sein, dass die Handhabungseinrichtung nach erfolgtem Überschub der Artikel-, Stückgut- und/oder Gebindelage bei Entfernung von der Auflagefläche und/oder durch Anheben von der Überschubstelle die Begrenzungs-und/oder Anschlagleiste mittels der Rückstellkraft und/oder durch Antrieb des Förderbandes entgegen der Überschubrichtung von der zweiten Endlage in die erste Endlage zurückschwenken lässt.

Normalweise kann eine Koppelung des Förderbandantriebes und der Schwenklage der Begrenzungs- und/oder Anschlagleiste mit der jeweiligen Position der Handhabungseinrichtung bzw. des Jalousiegreiferkopfes auf elektronischem Wege erfolgen, insbesondere unter Verwendung einer geeigneten Sensorik. Denkbar sind jedoch auch einfache mechanische Koppelungsmechanismen, so dass die jeweils notwendigen Schwenkbewegungen der Begrenzungs- und/oder Anschlagleiste zwischen ihren beiden Endlagen mittels eines mechanischen Betätigungselements auslösbar und/oder bewirkbar sind, das mit der sich an die Auflagefläche annähernden oder von dieser entfernenden Handhabungseinrichtung koppelbaren oder entkoppelbar ist.

Wenn im vorliegenden Zusammenhang von einer Handhabungseinrichtung die Rede ist, so kann diese etwa durch eine Greif- und/oder Aufnahmeeinheit zur Übernahme von Artikel-, Stückgut- und/oder Gebindelagen und zu deren weiterer Handhabung gebildet sein, bspw. zu deren Stapelung und/oder Palettierung oder auch zu einer Positionierung auf einem vorgesehenen Ablageort. Die Handhabungseinrichtung kann insbesondere auch durch einen Greiferkopf wie bspw. einen Jalousiegreiferkopf gebildet sein, der in der Lage ist, die Artikel-, Stückgut- und/oder Gebindelage durch horizontalen Überschub von der Auflagefläche zu übernehmen, durch eine Hub- und/oder Schwenkbewegung an einen vorgesehenen Ablageort zu befördern und dort durch Öffnen eines beweglichen Bodens oder einer bspw. durch eine Jalousie oder durch eine Vielzahl von Auflagerollen gebildeten entfernbaren Bodenfläche senkrecht nach unten abzusetzen oder abzulegen, bspw. auf einer Palette oder auf einer Oberseite einer dort bereits zuvor abgelegten Artikel-, Stückgut- und/oder Gebindelage, was einem Stapel- und/oder Palettierungsprozess entsprechen kann.

Wenn zudem von einer Auflagefläche mit mehreren festen oder verstellbaren oder beweglichen Anlageleisten oder Schiebern die Rede ist, auf der die Artikel-, Stückgut-und/oder Gebindelage steht, um in einer definierten Förder- oder Überschubrichtung unter Passieren der in horizontale Position (hier als zweite Endlage bezeichnet) gebrachten Begrenzungs- und/oder Anschlagleiste in die Handhabungseinrichtung bzw. den Jalousiegreiferkopf überschoben zu werden, so kann diese Auflagefläche insbesondere Teil einer Gruppierstation oder einer Packstation sein, in der die zu palettierenden Artikel-, Stückgut- und/oder Gebindelagen in eine gewünschte, zur Palettierung geeignete rechteckförmige Lagenformation gebracht werden. Zu diesem Zweck können die zu gruppierenden Artikel, Stückgüter und/oder Gebinde z.B. aus einem linearen Massenstrom mittels geeigneter Greif- und/oder Handhabungseinrichtungen in definierter Weise gegriffen, gedreht und/oder verschoben werden, bis sie in eine Anordnung und Ausrichtung zueinander gebracht sind, die sich im Bereich der Auflagefläche durch aufstauende und/oder schiebende Einwirkung in eine weitgehend lückenlose, rechteckförmige Lagenformation bringen lässt, so dass Artikel-, Stückgut- und/oder Gebindelagen gebildet werden, die nachfolgend in der beschriebenen Weise gestapelt und/oder palettiert werden können. Wie oben bereits angedeutet, kann die Auflagefläche wahlweise mit einer Horizontalfördereinrichtung ausgestattet sein, die es ermöglicht, die Artikel-, Stückgut- und/oder Gebindelagen von der Auflagefläche der Gruppierstation in die Handhabungseinrichtung bzw. in den Jalousiegreiferkopf zu überführen.

Die Artikel oder Stückgüter können bspw. Pakete unterschiedlichster Art sein; die erwähnten Gebinde können bspw. aus mehreren zusammengefassten Getränkebehältern bestehen, die bspw. mittels Schrumpffolie oder einer Folien- oder Kartonumverpackung o. dgl. zusammengehalten sind.

Die oben erwähnte Schwenkachse der erfindungsgemäßen Begrenzungs- und/oder Anschlagleiste befindet sich vorzugsweise in etwa parallel zur Auflagefläche und typischerweise leicht unterhalb deren Oberflächenniveau, so dass die Leiste in ihrer zweiten Endlage die Auflagefläche verlängert und nahezu bündig mit der Oberfläche der Auflagefläche abschließt, somit eine Verbindungs- und/oder Überschubfläche für die zu überschiebende Artikel-, Stückgut-und/oder Gebindelage bildet und den darüber geschobenen Artikel-, Stückgut- und/oder Gebindelagen keinen Widerstand entgegen setzt.

Die rückstellende Kraft, die in Richtung der ersten Endlage wirkt und die Begrenzungs- und/oder Anschlagleiste in dieser Ruhelage fixiert, muss ausreichend groß sein, um die Leiste bei dagegen geschobenen Artikeln, Stückgütern und/oder Gebinden nicht ungewollt in Richtung der zweiten Endlage umklappen zu lassen, da in diesem Fall die Begrenzungs- und/oder Anschlagleiste ihre wichtige Funktion beim Zusammenschieben der Artikel, Stückgüter und/oder Gebinde und bei der Herstellung der jeweiligen Lagenordnungen nicht mehr erfüllen könnte. Denkbar ist grundsätzlich auch eine zusätzliche mechanische Verriegelung, die bspw. durch ein Betätigungselement bei sich annähernder Handhabungseinrichtung entriegelt wird, um die Begrenzungs- und/oder Anschlagleiste in die für den Überschub notwendige zweite Endlage bringen zu können. Sofern jedoch die Rückstellkraft ausreichend groß ist, kann auf eine solche zusätzliche mechanische Verriegelung verzichtet werden.

Die Rückstellkräfte, die für die Erreichung und Aufrechterhaltung der ersten Endlage sorgen, können bspw. durch geeignete Federmechanismen aufgebracht werden, die mit der schwenk- und klappbaren Begrenzungs- und/oder Anschlagleiste in einer Weise zusammenwirken, dass sich die Leiste im Ruhezustand in der annähernd vertikalen ersten Endlage befindet. Solche Federmechanismen können bspw. durch seitlich an der Leiste angreifende Zugfedern oder durch im Bereich der Schwenkachse angeordnete Schenkelfedern o. dgl. gebildet sein. Es kann jedoch auch ausreichend sein, die Rückstellkräfte alleine durch den Antrieb des der Leiste zugeordneten Förderbandes aufzubringen, bspw. durch temporäre Blockierung des pneumatischen Antriebes für das Förderband.

Zur Erreichung des oben genannten Ziels schlägt die Erfindung weiterhin ein Verfahren zum Verschwenken einer Begrenzungs- und/oder Anschlagleiste nach Anspruch 8. Wahlweise kann dabei ein Antrieb des Förderbandes und/oder das Verschwenken der Begrenzungs- und/oder Anschlagleiste von der sich an die Auflagefläche annähernden oder von dieser entfernenden Handhabungseinrichtung ausgelöst oder zumindest beeinflusst werden.

Der besondere Vorteil der erfindungsgemäßen Anordnung ist der fehlende separate Antrieb, um die Begrenzungs- und /oder Anschlagleiste umzuklappen. Die passiv aufgehängte und schwenkbar gelagerte Leiste wird vielmehr mittels des sich entsprechend bewegenden Förderbandes betätigt und umgeklappt, so dass das Überschieben einer gruppierten Artikellage in den Jalousiegreiferkopf erleichtert wird und zudem auf einen separaten Schieber zum Überschieben der Artikellage verzichtet werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Elemente und/oder Teilen der Vorrichtung, der Anordnung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Anordnung ein besseres Verständnis für den in den Ansprüchen sowie im allgemeinen Teil der Beschreibung allgemeiner und/oder abstrakter formulierten Erfindungsgedanken abzuleiten.

Fig. 1 zeigt in zwei schematische Seitenansichten (Fig. 1A und Fig. 1B) den grundsätzlichen Aufbau einer zwischen zwei Endlagen verschwenkbaren Begrenzungs-und/oder Anschlagleiste, die zwischen einer Gruppierstation und einer Handhabungseinrichtung angeordnet sein kann.

Fig. 2 zeigt in zwei schematischen Detailansichten (Fig. 2A und Fig. 2B) die Funktionalitäten einer Ausführungsvariante einer zwischen zwei Endlagen verschwenkbaren Begrenzungs- und/oder Anschlagleiste.

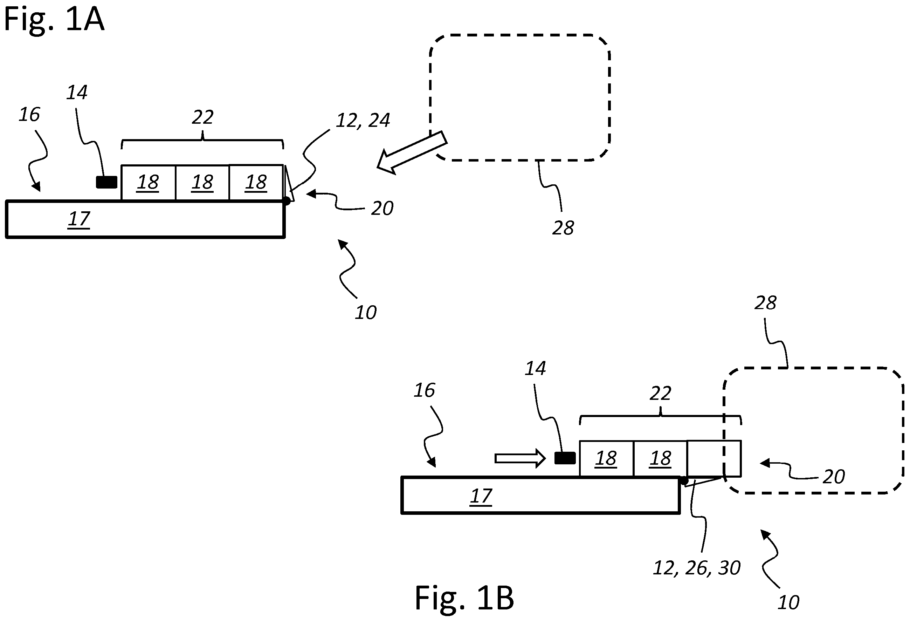

Für gleiche oder gleich wirkende Elemente der Erfindung werden in den Figuren 1A bis 2B jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen Beispiele dar, wie die erfindungsgemäße Anordnung sowie das erfindungsgemäße Verfahren ausgestaltet sein können, lassen jedoch nicht auf eine abschließende Begrenzung schließen. Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen.

Die schematische Seitenansichten der Figuren 1A und 1B zeigen einige Komponenten einer erfindungsgemäßen Anordnung 10 zum Verschwenken und Klappen einer zwischen zwei Endlagen verschwenkbaren und klappbaren Begrenzungs- und/oder Anschlagleiste 12 für auf einer an zwei oder drei Längsseiten durch feststehende oder bewegliche Anlageleisten oder Schieber 14 begrenzten Auflagefläche 16 gruppierte Artikel 18, Stückgüter und/oder Gebinde. Der Schieber 14 ist optional zu verstehen, da wahlweise die Auflagefläche 16 beweglich sein oder als Horizontalfördereinrichtung ausgebildet sein kann, die dazu geeignet ist, die Artikel 18 in Förderrichtung nach rechts in Richtung zur Überschubstelle 20 bzw. Handhabungseinrichtung 28 zu bewegen. Insbesondere ist die Begrenzungs- und/oder Anschlagleiste 12 gemäß der vorliegenden Erfindung mit einer steuerbaren Fördereinrichtung ausgestattet, die zumindest in einer horizontalen zweiten Endlage (Fig. 1B) einen Horizontalförderabschnitt 30 für eine zur Handhabungseinrichtung beförderte und/oder geschobene Artikel-, Stückgut- und/oder Gebindelage ausbildet.

Die Auflagefläche 16, die bspw. Teil einer Gruppierstation 17 sein und/oder mit einer Horizontalfördereinrichtung ausgestattet sein kann, weist an der dem Schieber 14 gegenüberliegenden Seite, an der sich auch die Begrenzungs- und/oder Anschlagleiste 12 befindet, eine Überschubstelle 20 zu einer in den Figuren 1A und 1B nicht im Detail ausgeführten höhen- und/oder lageveränderlichen Handhabungseinrichtung 28 mit einer Auflageoberfläche zur Übernahme einer gruppierten Artikellage 22, Stückgut- und/oder Gebindelage auf. Die Handhabungseinrichtung 28 kann dabei insbesondere durch einen mittels Schwenkarm an einer Hubsäule gelagerten und dadurch höhenverstellbaren und seitlich verschwenkbaren Jalousiegreiferkopf gebildet sein, der seitlich an die Überschubstelle 20 zur geschobenen und/oder mittels Horizontalfördereinrichtung bewirkten Übernahme einer Artikellage 22 angelegt werden kann. Der Jalousiegreiferkopf und seine Aufhängung können hinsichtlich ihres Layouts bspw. in einer Weise ausgebildet sein, wie sie in der DE 20 2009 000 109 U1 offenbart ist; dort findet sich ein solcher Jalousiegreiferkopf, der an einer Hubsäule gehalten ist.

Die Darstellung der Fig. 1A zeigt die auf der Auflagefläche 16 gruppierte und mittels Schieber 14 an die in der ersten Endlage 24 befindliche Begrenzungs- und/oder Anschlagleiste 12 geschobene Artikellage 22. Die Überschubstelle 20 ist solchermaßen mit der in die vertikale erste Endlage 24 verschwenkten Begrenzungs- und/oder Anschlagleiste 12 versperrt und blockiert. Die mit der Bezugsziffer 28 lediglich schematisch angedeutete Handhabungseinrichtung befindet sich noch in einer von der Überschubstelle 20 entfernten Position und kann daher noch keine Artikel 18 oder die komplette Artikellage 22 übernehmen.

Die Darstellung der Fig. 1B zeigt dagegen die in die zweite Endlage 26 nach unten in horizontale Lage verschwenkte Begrenzungs- und/oder Anschlagleiste 12, die damit die Überschubstelle 20 freigibt und einen die Auflagefläche 16 der Gruppierstation 17 verlängernden Horizontalförderabschnitt 30 bildet, so dass der Schieber 14 die Artikellage 22 in Richtung dieses Horizontalförderabschnittes 30 schieben kann, der mittels seines eigenen Antriebes für eine Weiterförderung der Artikellage 22 in Richtung zur passend an der vorderen Kante der horizontal liegenden Leiste 12 positionierten Handhabungseinrichtung 28 sorgen kann, wobei die Handhabungseinrichtung 28 hier nur durch unterbrochene Linierung angedeutet ist.

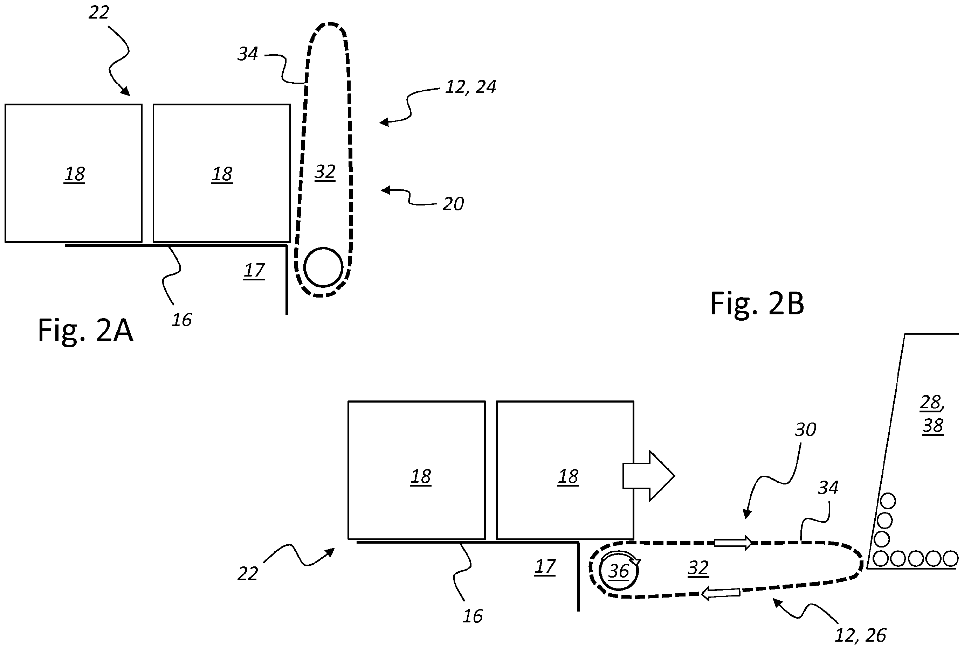

Die Figuren 2A und 2B zeigen in einer Detailansicht eine Ausführungsvariante der erfindungsgemäßen Begrenzungs- und/oder Anschlagleiste 12, die erfindungsgemäß mit einer Fördereinrichtung 32 ausgestattet ist, die in der in Fig. 2B gezeigten zweiten Endlage 26 der Leiste 12 den solchermaßen gebildeten Horizontalförderabschnitt 30 für die jeweils zur Handhabungseinrichtung 28 beförderte und/oder geschobene Artikellage 22 ausbildet. Die beiden Detailansichten der Figuren 2A und 2B zeigen lediglich zwei Artikel 18 einer ggf. größeren Artikellage 22. Wie es das Ausführungsbeispiel zeigt, ist die der Begrenzungs- und/oder Anschlagleiste 12 zugeordnete Fördereinrichtung 32 durch ein motorisch antreibbares Förderband 34 gebildet.

Wenn sich die Begrenzungs- und/oder Anschlagleiste 12 gemäß Fig. 2A in ihrer ersten Endlage 24 befindet, bei der sie ungefähr vertikal nach oben ragt und ein Überschieben der Artikel 18 einer Artikellage 22 von der ggf. mit einer angetriebenen Auflagefläche 16 ausgestatteten Gruppierstation 17 in Richtung zur Überschubstelle 20 verhindert, ist das Förderband 34 der Fördereinrichtung 32 nicht angetrieben. Die erste Endlage 24 kann hierbei ggf. durch Rückstellkräfte einer Feder oder des für den Antrieb des Förderbandes 34 eingesetzten Motors eingenommen bzw. sichergestellt werden. Wird das Förderband 34 dagegen motorisch angetrieben, bspw. mittels eines Elektromotors oder mittels pneumatischen Antriebes 36, so sorgt dieser Antrieb nicht nur für eine umlaufende Bewegung des Förderbandes 34 in Förderrichtung (in Fig. 2B nach rechts), wie dies die dem Förderband 34 zugeordneten Pfeile andeuten, sondern bringen gleichzeitig die Begrenzungs- und/oder Anschlagleiste 12 in die zweite Endlage 26, so dass sie dadurch den Horizontalförderabschnitt 30 zwischen der Auflagefläche 16 und der unmittelbar an die Überschubstelle 20 positionierten Handhabungseinrichtung 28 ausbildet. Somit weist der Schwenkmechanismus der zwischen den beiden Endlagen 24 und 26 verschwenkbaren Begrenzungs- und/oder Anschlagleiste 12 keinen aktuatorischen Antrieb auf, wie er sich bspw. als linearer Stellantrieb in der DE 20 2009 000 109 U1 findet, sondern wird mittels des pneumatischen Antriebes 36 für das Förderband 34 verschwenkt und in die zweite Endlage 26 gebracht. Sobald sich die bspw. durch einen Jalousiegreiferkopf 38 gebildete Handhabungseinrichtung 28 wieder von der Fördereinrichtung 32 entfernt, kann das Förderband 34 angehalten werden, wodurch die Leiste 12 aus der in Fig. 2B gezeigten zweiten Endlage 26 durch Wirkung einer Rückstellkraft und/oder durch Motorwirkung in ihre erste Endlage 24 zurückschwenkt, wie sie in der Fig. 2A gezeigt ist.

Wenn die Auflagefläche 16 der Gruppierstation 17 über einen eigenen Antrieb verfügt und bspw. als Horizontalfördereinrichtung ausgebildet ist, wird für den Überschub der Artikellage 22 gemäß Fig. 2B kein separater Schieber 14 benötigt, wie er in den Figuren 1A und 1B gezeigt ist. In diesem Fall kann die als Horizontalförderabschnitt 30 ausgebildete Fördereinrichtung 32 mit dem motorisch angetriebenen umlaufenden Förderband 34 die Strecke zwischen der Gruppierstation 17 und der bereitstehenden Handhabungseinrichtung 28 überbrücken, so dass die gesamte Artikellage 22 in den Jalousiegreiferkopf 38 der Handhabungseinrichtung 28 überführt werden kann.

Der Jalousiegreiferkopf 38 ist so dimensioniert, dass er eine komplette Artikellage 22 aufnehmen und durch Öffnen seines Bodens an gewünschter Stelle absetzen kann, bspw. zur Bildung eines Palettenstapels aus mehreren übereinander gestapelten Artikellagen 22 (nicht gezeigt).

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Anordnung, Anordnung zum Verschwenken der Begrenzungs- und/oder Anschlagleiste
- 12: Begrenzungsleiste, Anschlagleiste, Begrenzungs- und/oder Anschlagleiste
- 14: Schieber
- 16: Auflagefläche
- 17: Gruppierstation
- 18: Artikel
- 20: Überschubstelle
- 22: Artikellage, gruppierte Artikellage
- 24: erste Endlage, Ruhelage
- 26: zweite Endlage
- 28: Handhabungseinrichtung
- 30: Horizontalförderabschnitt
- 32: Fördereinrichtung
- 34: Förderband
- 36: Antrieb, pneumatischer Antrieb
- 38: Jalousiekopf, Jalousiegreiferkopf

## Patentansprüche

1. Anordnung (10) zur Verschwenkung einer zwischen zwei Endlagen (24, 26) verschwenkbaren Begrenzungs- und/oder Anschlagleiste (12) für auf einer an zwei oder drei Längsseiten durch feststehende oder bewegliche Anlageleisten oder Schieber (14) begrenzten Auflagefläche (16) einer Gruppierstation gruppierte Artikel (18), Stückgüter und/oder Gebinde, welche Auflagefläche (16) an einer vierten Seite eine Überschubstelle (20) zu einer höhen- und/oder lageveränderlichen Handhabungseinrichtung (28) mit einer Auflageoberfläche zur Übernahme einer gruppierten Artikellage (22), Stückgut- und/oder Gebindelage aufweist, wobei die Begrenzungs- und/oder Anschlagleiste (12):
- um eine in etwa parallel zur Auflagefläche (16) und unterhalb dieser befindlichen Schwenkachse zwischen zwei Endlagen (24, 26) verschwenkbar ist,
- in der ersten Endlage (24) eine Anlageleiste für die dagegen schiebbaren gruppierten Artikel (18), Stückgüter und/oder Gebinde bildet, sowie
- in der zweiten Endlage (26) eine mit der Auflagefläche (16) der Gruppierstation annähernd parallele oder in Überschubrichtung leicht nach oben oder nach unten geneigte Auflageleiste bildet, welche die Auflagefläche (16) verlängert und eine Verbindungs- und/oder Überschubfläche für die zu überschiebende Artikellage (22), Stückgut- und/oder Gebindelage zur Auflageoberfläche der Handhabungseinrichtung (28) liefert oder bildet,
**dadurch gekennzeichnet, dass**
- die Begrenzungs- und/oder Anschlagleiste (12) mit einer steuerbaren Fördereinrichtung (32) ausgestattet ist, die zumindest in der zweiten Endlage (26) einen Horizontalförderabschnitt (30) für die zur Handhabungseinrichtung (28) beförderte und/oder geschobene Artikellage (22), Stückgut- und/oder Gebindelage ausbildet, und
- die der Begrenzungs- und/oder Anschlagleiste (12) zugeordnete Fördereinrichtung (32) durch ein antreibbares Förderband (34) gebildet ist, wobei das die Fördereinrichtung (32) bildende Förderband (34) zumindest bei in die zweite Endlage (26) gebrachter Begrenzungs- und/oder Anschlagleiste (12) in Überschubrichtung der Artikellage (22), Stückgut- und/oder Gebindelage antreibbar ist, und wobei ein Antrieb (36) des die Fördereinrichtung (32) bildenden Förderbandes (34) mit dem Schwenkmechanismus der Begrenzungs- und/oder Anschlagleiste (12) in einer Weise zusammenwirkt, dass eine Antriebsrichtung des Förderbandes (34) in Überschubrichtung die Begrenzungs- und/oder Anschlagleiste (12) gegen die Wirkung einer Rückstellkraft in Richtung zur zweiten Endlage (26) verschwenkt, und dass ein Stillstand des Förderbandes (34) oder eine gegensinnige Antriebsrichtung des Förderbandes (34) die Begrenzungs-und/oder Anschlagleiste (12) unter Wirkung der Rückstellkraft in Richtung zur ersten Endlage (26) zurückschwenken lässt.

2. Anordnung nach Anspruch 1, bei der das die Fördereinrichtung (32) bildende Förderband (34) zumindest bei in die zweite Endlage (26) gebrachter Begrenzungs-und/oder Anschlagleiste (12) antreibbar ist und dadurch den Horizontalförderabschnitt (30) zwischen der Auflagefläche (16) und der an die Überschubstelle (20) positionierten Handhabungseinrichtung (28) ausbildet.

3. Anordnung nach Anspruch 1 oder 2, bei der das die Fördereinrichtung (32) bildende Förderband (34) bei aus der zweiten Endlage (26) in Richtung der ersten Endlage (24) zu schwenkender Begrenzungs- und/oder Anschlagleiste (12) entgegen der Überschubrichtung der Artikellage (22), Stückgut- und/oder Gebindelage antreibbar ist.

4. Anordnung nach einem der vorherigen Ansprüche, bei der ein Antrieb (36) des die Fördereinrichtung (32) bildenden Förderbandes (34) mit dem Schwenkmechanismus der Begrenzungs- und/oder Anschlagleiste (12) in einer Weise zusammenwirkt, dass eine Antriebsrichtung des Förderbandes (34) in Überschubrichtung die Begrenzungs-und/oder Anschlagleiste (12) in Richtung zur zweiten Endlage (26) verschwenkt, und dass eine gegensinnige Antriebsrichtung des Förderbandes (34) die Begrenzungs-und/oder Anschlagleiste (12) in Richtung zur ersten Endlage (26) zurückschwenkt.

5. Anordnung nach einem der vorherigen Ansprüche, bei der das die Fördereinrichtung (32) bildende Förderband (34) einen elektromotorischen oder einen fluidischen Antrieb (34) aufweist.

6. Anordnung nach einem der vorherigen Ansprüche, bei der eine Bewegungssteuerung der Begrenzungs- und/oder Anschlagleiste (12) zwischen ihren beiden Endlagen (24, 26) mit einer Position der Handhabungseinrichtung (28) in Bezug auf die Auflagefläche (16) gekoppelt ist, wobei Schwenkbewegungen der Begrenzungs-und/oder Anschlagleiste (12) zwischen ihren beiden Endlagen (24, 26) durch die sich an die Auflagefläche (16) annähernde oder von dieser entfernenden Handhabungseinrichtung (28) auslösbar und/oder bewirkbar sind.

7. Anordnung nach Anspruch 6, bei der die Handhabungseinrichtung (28) nach erfolgtem Überschub der Artikellage (22), Stückgut- und/oder Gebindelage bei Entfernung von der Auflagefläche (16) und/oder durch Anheben von der Überschubstelle (20) die Begrenzungs- und/oder Anschlagleiste (12) mittels der Rückstellkraft und/oder durch Antrieb des Förderbandes (34) entgegen der Überschubrichtung von der zweiten Endlage (26) in die erste Endlage (24) zurückschwenken lässt.

8. Verfahren zum Verschwenken der Begrenzungs- und/oder Anschlagleiste einer Anordnung gemäß einem der Ansprüche 1 bis 7, zwischer zwei Endlagen (24, 26), wobei das Förderband (34) in der Überschubrichtung zum Schwenken der Begrenzungs- und/oder Anschlagleiste (12) in Richtung zur zweiten Endlage (26) angetrieben wird, und wobei das Förderband (34) in der gegensinnigen Antriebsrichtung des Förderbandes (34) angetrieben wird oder im Stillstand gebracht wird zum Zurückschwenken der Begrenzungs- und/oder Anschlagleiste (12) in Richtung zur ersten Endlage (26).

9. Verfahren nach Anspruch 8, bei dem ein Antrieb (36) des Förderbandes (34) und/oder das Verschwenken der Begrenzungs- und/oder Anschlagleiste von der sich an die Auflagefläche (16) annähernden oder von dieser entfernenden Handhabungseinrichtung (28) ausgelöst oder zumindest beeinflusst werden.

## Claims

1. An arrangement (10) used to swivel a limit bar and/or stop bar (12), which is swivelable between two end positions (24, 26), the limit bar and/or stop bar (12) being intended for articles (18), piece goods, and/or packs grouped on a support surface (16) of a grouping station, the support surface (16) being limited on two or three longitudinal sides by stationary or movable stop bars or pushers (14), which support surface (16) has a transfer point (20) on a fourth side to a height-variable and/or position-variable handling device (28) with a support surface top for receiving a grouped article layer (22), piece good layer, and/or pack layer, wherein the limit bar and/or stop bar (12):
- is swivelable between two end positions (24, 26) about a swivel axis located approximately parallel to and below the support surface (16),
- in the first end position (24) forms a contact bar for the grouped articles (18), piece goods and/or packs, which are pushable against the contact bar, and
- in the second end position (26) forms a support bar approximately parallel to the support surface (16) of the grouping station or inclined slightly upward or downward in transfer direction, which support bar extends the support surface (16) and provides or forms a connection surface and/or transfer surface to the support surface top of the handling device (28) for the article layer (22), piece good layer, and/or pack layer to be transferred,
**characterised in that**
- the limit bar and/or stop bar (12) is equipped with a controllable conveying device (32), which at least in the second end position (26) forms a horizontal conveying section (30) for the article layer (22), piece good layer, and/or pack layer that is being conveyed and/or pushed to the handling device (28), and
- which conveying device (32) that is assigned to the limit bar and/or stop bar (12) is formed by a drivable conveyor belt (34), wherein, at least with the limit bar and/or stop bar (12) having been brought into the second end position (26), the conveyor belt (34) forming the conveying device (32) is drivable in transfer direction of the article layer (22), piece good layer, and/or pack layer, and wherein a drive (36) of the conveyor belt (34) forming the conveying device (32) interacts with the swivel mechanism of the limit bar and/or stop bar (12) in such a manner that a drive direction of the conveyor belt (34) in transfer direction swivels the limit bar and/or stop bar (12) against the effect of a restoring force toward the second end position (26), and that a standstill of the conveyor belt (34) or an opposite drive direction of the conveyor belt (34) causes the limit bar and/or stop bar (12) to swivel back toward the first end position (26) under the effect of the restoring force.

2. The arrangement according to claim 1, in which, at least with the limit bar and/or stop bar (12) having been brought into the second end position (26), the conveyor belt (34) forming the conveying device (32) is drivable and thereby forms the horizontal conveying section (30) between the support surface (16) and the handling device (28) positioned at the transfer point (20).

3. The arrangement according to claim 1 or 2, in which, with the limit bar and/or stop bar (12) to be swivelled from the second end position (26) toward the first end position (24), the conveyor belt (34) forming the conveying device (32) is drivable opposite to the transfer direction of the article layer (22), piece good layer, and/or pack layer.

4. The arrangement according to one of the previous claims, in which a drive (36) of the conveyor belt (34) forming the conveying device (32) interacts with the swivel mechanism of the limit bar and/or stop bar (12) in such a manner that a drive direction of the conveyor belt (34) in transfer direction swivels the limit bar and/or stop bar (12) toward the second end position (26), and that an opposite drive direction of the conveyor belt (34) swivels the limit bar and/or stop bar (12) back toward the first end position (26).

5. The arrangement according to one of the previous claims, in which the conveyor belt (34) forming the conveying device (32) has an electromotive or a fluidic drive (34).

6. The arrangement according to one of the previous claims, in which a movement control of the limit bar and/or stop bar (12) between its two end positions (24, 26) is coupled with a position of the handling device (28) in relation to the support surface (16), wherein swivel movements of the limit bar and/or stop bar (12) between its two end positions (24, 26) are triggerable and/or causable by the handling device (28) approaching the support surface (16) or moving away from it.

7. The arrangement according to claim 6, in which, after the transfer of the article layer (22), piece good layer, and/or pack layer has been carried out, the handling device (28), when moving away from the support surface (16) and/or by lifting from the transfer point (20), causes the limit bar and/or stop bar (12) to swivel back from the second end position (26) to the first end position (24) by means of the restoring force and/or by the driving of the conveyor belt (34) opposite to the transfer direction.

8. A method used to swivel the limit bar and/or stop bar of an arrangement according to one of the claims 1 to 7 between two end positions (24, 26), wherein the conveyor belt (34) is driven in the transfer direction in order to swivel the limit bar and/or stop bar (12) toward the second end position (26), and wherein the conveyor belt (34) is driven in the opposite drive direction of the conveyor belt (34) or is brought to a standstill in order to swivel the limit bar and/or stop bar (12) back toward the first end position (24).

9. The method according to claim 8, in which a drive (36) of the conveyor belt (34) and/or the swivelling of the limit bar and/or stop bar are triggered or at least influenced by the handling device (28) approaching the support surface (16) or moving away from it.

## Revendications

1. Ensemble (10) de pivotement d'une barre de limitation et/ou de butée (12) qui peut pivoter entre deux positions extrêmes (24, 26) et est destinée à des articles (18), produits de détail et/ou multipacks groupés sur une face d'appui (16) d'un poste de groupement qui est délimitée sur deux ou trois côtés longitudinaux par des barres d'appui ou coulisseaux (14) fixes ou mobiles, laquelle face d'appui (16) présente, sur un quatrième côté, un point de transfert par poussée (20) vers un dispositif de manipulation (28) qui est réglable en hauteur et/ou en position et qui présente une surface d'appui pour recevoir une couche groupée d'articles (22), de produits de détail et/ou de multipacks, dans lequel la barre de limitation et/ou de butée (12):
- peut pivoter entre deux positions extrêmes (24, 26) autour d'un axe de pivotement situé à peu près parallèlement à la face d'appui (16) et en dessous de celle-ci,
- forme, dans la première position extrême (24), une barre d'appui pour les articles (18), les produits de détail et/ou les multipacks groupés qui peuvent être poussés contre celle-ci, et
- forme, dans la deuxième position extrême (26), une barre d'appui qui est à peu près parallèle à la face d'appui (16) du poste de groupement ou légèrement inclinée vers le haut ou vers le bas dans la direction de transfert par poussée et qui prolonge la face d'appui (16) et fournit ou forme un surface de liaison et/ou de transfert par poussée pour la couche d'articles (22), la couche de produits de détail et/ou de multipacks à transférer par poussée, vers la surface d'appui du dispositif de manipulation (28),
**caractérisé par le fait que**
- la barre de limitation et/ou de butée (12) est équipée d'un dispositif de transport (32) commandable qui, au moins dans la deuxième position extrême (26), forme une section de transport horizontal (30) pour la couche d'articles (22), la couche de produits de détail et/ou de multipacks transportée et/ou poussée vers le dispositif de manipulation (28), et
- le dispositif de transport (32) associé à la barre de limitation et/ou de butée (12) est formé par une bande transporteuse (34) entraînable, dans lequel la bande transporteuse (34) formant le dispositif de transport (32) peut être entraînée dans la direction de transfert par poussée de la couche d'articles (22), couche de produits de détail et/ou de multipacks, au moins lorsque le la barre de limitation et/ou de butée (12) est amenée dans la deuxième position extrême (26), et dans lequel un entraînement (36) de la bande transporteuse (34) formant le dispositif de transport (32) agit de concert avec le mécanisme de pivotement de la barre de limitation et/ou de butée (12) d'une telle manière qu'une direction d'entraînement de la bande transporteuse (34) dans la direction de transfert par poussée fait pivoter la barre de limitation et/ou de butée (12) contre l'effet d'une force de rappel en direction de la deuxième position extrême (26), et qu'un arrêt de la bande transporteuse (34) ou un sens inverse d'entraînement de la bande transporteuse (34) fait repivoter la barre de limitation et/ou de butée (12) sous l'effet de la force de rappel en direction de la première position extrême (26).

2. Ensemble selon la revendication 1, dans lequel la bande transporteuse (34) formant le dispositif de transport (32) peut être entraînée au moins lorsque la barre de limitation et/ou de butée (12) est amenée dans la deuxième position extrême (26) et forme ainsi la section de transport horizontal (30) entre la face d'appui (16) et le dispositif de manipulation (28) positionné sur le point de transfert par poussée (20).

3. Ensemble selon la revendication 1 ou 2, dans lequel, lorsque la barre de limitation et/ou de butée (12) est à pivoter depuis la deuxième position extrême (26) en direction de la première position extrême (24), la bande transporteuse (34) formant le dispositif de transport (32) peut être entraînée à l'encontre de la direction de transfert par poussée de la couche d'articles (22), couche de produits de détail et/ou de multipacks.

4. Ensemble selon l'une quelconque des revendications précédentes, dans lequel un entraînement (36) de la bande transporteuse (34) formant le dispositif de transport (32) agit de concert avec le mécanisme de pivotement de la barre de limitation et/ou de butée (12) d'une telle manière qu'une direction d'entraînement de la bande transporteuse (34) dans la direction de transfert par poussée fait pivoter la barre de limitation et/ou de butée (12) en direction de la deuxième position extrême (26), et qu'un sens inverse d'entraînement de la bande transporteuse (34) fait repivoter la barre de limitation et/ou de butée (12) en direction de la première position extrême (26).

5. Ensemble selon l'une quelconque des revendications précédentes, dans lequel la bande transporteuse (34) formant le dispositif de transport (32) comprend un entraînement par moteur électrique ou un entraînement fluidique (34).

6. Ensemble selon l'une quelconque des revendications précédentes, dans lequel une commande de déplacement de la barre de limitation et/ou de butée (12) entre ses deux positions extrêmes (24, 26) est couplée à une position du dispositif de manipulation (28) par rapport à la face d'appui (16), dans lequel des mouvements de pivotement de la barre de limitation et/ou de butée (12) entre ses deux positions extrêmes (24, 26) peuvent être déclenchés et/ou provoqués par le dispositif de manipulation (28) se rapprochant de la face d'appui (16) ou s'éloignant de celle-ci.

7. Ensemble selon la revendication 6, dans lequel, après que la couche d'articles (22), la couche de produits de détail et/ou de multipacks a été transférée par poussée, le dispositif de manipulation (28) - lorsqu'il s'éloigne de la face d'appui (16) et/ou en le soulevant du point de transfert par poussée (20) - fait repivoter la barre de limitation et/ou de butée (12) de la deuxième position extrême (26) dans la première position extrême (24) au moyen de la force de rappel et/ou en entraînant la bande transporteuse (34) à l'encontre de la direction de transfert par poussée.

8. Procédé de pivotement de la barre de limitation et/ou de butée d'un ensemble selon l'une quelconque des revendications 1 à 7 entre deux positions extrêmes (24, 26), dans lequel la bande transporteuse (34) est entraînée dans la direction de transfert par poussée pour faire pivoter la barre de limitation et/ou de butée (12) en direction de la deuxième position extrême (26), et dans lequel la bande transporteuse (34) est entraînée dans le sens inverse d'entraînement de la bande transporteuse (34) ou est arrêtée afin de faire repivoter la barre de limitation et/ou de butée (12) en direction de la première position extrême (26).

9. Procédé selon la revendication 8, dans lequel un entraînement (36) de la bande transporteuse (34) et/ou le pivotement de la barre de limitation et/ou de butée sont déclenchés ou au moins influencés par le dispositif de manipulation (28) se rapprochant de la face d'appui (16) ou s'éloignant de celle-ci.
